# EUROPEAN PATENT SPECIFICATION

(11) **EP 3 036 054 B1**
(45) Date of publication and mention of the grant of the patent: **30.12.2020**
(21) Application number: 14747803.6
(22) Date of filing: 23.07.2014
(51) Int. Cl.: B21C 37/15, B23P 11/02, F16L 9/04, B21C 37/06

(54) **PROCESS FOR PRODUCING A MULTILAYER PIPE BY EXPANSION**
VERFAHREN ZUR HERSTELLUNG EINES MEHRSCHICHTIGEN ROHRES DURCH EXPANSION
PROCESSUS DE PRODUCTION D'UN TUYAU À COUCHES MULTIPLES PAR EXPANSION

(30) Priority: 23.08.2013 BR 102013021663
(43) Date of publication of application: 29.06.2016
(73) Proprietor: Vallourec Tubos Do Brasil S.A., 30640-010 Belo Horizonte, MG (BR)
(72) Inventor: SILVEIRA E SILVA, Júlio Márcio, 30310-350 Belo Horizonte-MG (BR); EBELING, Timo, 30575-190 Belo Horizonte-MG (BR); DA SILVA PERDIGÃO, Hezick, 30512-720 Belo Horizonte-MG (BR); GRANHA GIORGINI, Danielle, 30575-100 Belo Horizonte-MG (BR); ALVES PINHEIRO, Gustavo, 30575-360 Belo Horizonte-MG (BR); AMES, Jochen Peter, 30431-183 Belo Horizonte-MG (BR); DA SILVA PENNA, Antônio Wagner, Contagem-MG (BR)
(74) Representative: de Kernier, Gabriel
(86) International application number: PCT/BR2014/000250
(87) International publication number: WO 2014/169367

(56) References cited:
- WO-A1-2004/103603
- DE-A1-102010 044 463
- JP-A- S5 545 553
- JP-A- S61 283 415
- US-A- 3 156 042
- US-A- 5 097 585

## Description

The present invention relates to a process for producing a multilayer pipe from at least one inner pipe and one outer pipe by means of at least one mechanical forming step. The pipes produced by this method typically have a corrosion-resistant layer, which enables their use in highly corrosive environments.

### Description of the Prior Art

Multilayer pipes, such as pipes having a metallurgical bond (also known as "clad pipes") and pipes having a mechanical bond (also known as "lined pipes"), as well as their processes of manufacturing are object of current industrial development, said multilayer pipes being mainly used in the oil industry wherein there may be strong mechanical stress and highly corrosive environments. Sometimes, the internally circulating fluid may also promote a chemical attack to the pipe, requiring the use of corrosion-resistant alloys (CRA).

According to the definition provided in the standards DNV-OS-F101 and API 5LD, a clad pipe consists of an external pipe having a corrosion-resistant inner layer where the bond between these materials is metallurgical. According to the definition provided in the standards DNV OS F101 and API 5LD, a lined pipe consists of an external pipe having a corrosion-resistant inner layer, where the bond between these materials is mechanical. The clad pipes may optionally be manufactured from lined pipes.

The prior art contains several processes for manufacturing clad pipes, generally including a material preparation step, an optional layer step and a cladding step. Two well-known processes used in industrial scale for large production batches are cladding by rolling and overlay welding. In the cladding process by sheet rolling, the sheet rolling of two different materials is made simultaneously, said process originating one single clad sheet. This sheet is then treated, formed and welded longitudinally originating the seam clad pipe.

In the cladding process by overlay welding, the materials are joined by deposition of fillet welds throughout the inner pipe surface. The material used in the fillet weld is normally a corrosion-resistant alloy. The weld deposition process enables a metallurgical bond between the internal and external materials of the seamless clad pipe.

Another process for manufacturing a seamless clad pipe is described in document GB2085330. The clad pipe is formed by at least two metal layers comprising a cold drawing step to obtain a good mechanical bond of the layers, resulting in a lined pipe in which preferably the ends are welded so as to prevent intrusion of air between the pipes. The drawing carried out is thus not sufficient to ensure the quality of the product. A step of hot forming in which the lined pipe is heated, preferably in a furnace is also carried out, and preferably a nickel intermediate layer is disposed to prevent diffusion of carbon. However, this additional layer increases the cost of the product.

The hot forming step disclosed in prior-art document GB2085330 comprises hot pressing or rolling of the outer pipe, but the document does not describe how this hot forming step is performed. Pressing normally requires the manufacture of a special die having fixed pipe-making dimensions. The manufacture of this die and the pressing operation are feasible alternatives only in special applications due to the cost and the impossibility of producing pipes with different sizes.

Document US3598156 discloses a bimetal tubing comprising an intermediate iron or steel layer and two copper layers at the inner and outer surfaces of the pipe. An embodiment of the bimetal tubing contains a cold mechanical expansion step followed by heating between 950°C and 1050°C with a high frequency inductor, to obtain the metallurgical bond between the intermediate layer and the outer and inner pipes. The metallurgical bond occurs due to the melting of the intermediate layer; however, no additional pipe forming step is performed. To perform the expansion, a tapered mandrel is used, which is fixed to rod, and the pipe is longitudinally moved along the mandrel, when pulled by the drawing carriage. A second bimetal tubing embodiment exhibits in its manufacturing process a codrawing step followed by heating by electromagnetic induction.

For the bimetal tubing of document US3598156 to be produced in a single cold-forming step, an initial step is required to prepare the material, consisting in galvanizing the intermediate layer, that is, a layer of low-melting point Zn, Pb, Ag, Al needs to be deposited which, when heated, performs a metallurgical bond with the iron or steel pipe without joining the outer and inner layers.

Document JPS61283415 , which forms the basis for the preamble of claim 1, discloses a process of forming a double pipe with increased outside wear resistance which comprises superposing an outer pipe of high yield point and high wear resistance on an inner pipe of low yield point facing each other, changing its radius to fasten both the pipes, then expanding the radii of both pipes to subject to auto-frettage. This document does not disclose a process for forming a mutilayer pipe having an inner corrosion resistant layer and suitable for highly corrosive environment.

None of the prior-art processes discloses the production of a lined or clad pipe from at least two metal pipes using only one forming step, without the need for additional thermal treatment or forming steps, so as to obtain the multilayer pipe with the desired quality. Similarly, no prior-art reference discloses the production of said multilayer pipes from seemless pipes, and none of the prior art documents discloses a seamless clad pipe.

Thus, the objectives of the present invention are to provide a process for producing multilayer pipes from seamless pipes in a more economical manner, substantially reducing the efforts in the process by expansion, while ensuring the final quality of the multilayer pipes.

### Brief Description of the Invention

The objectives of the invention are achieved by a process for producing a multilayer pipe according to independent claim 1.

Before the mounting step between the pipes, a chemical preparation step is preferably performed in the following sequence:
acid pickling of at least the inner surface of the inner pipe;
neutralizing and washing of the at least the inner surface of the inner pipe; applying lubricant on the inner surface of the inner pipe.

The step of applying lubricant may comprise applying a reactive oil based lubricant or a combination of oxalate and reactive soap.

Preferably, before the mounting step between the pipes, a shot-blasting step is performed on the inner surface of the outer pipe and on the outer surface of the inner pipe.

Alternatively, after the mounting step between the pipes, a positioning step is carried out, in which the outer and inner pipes mounted together are arranged with one end supported on an expansion die and are secured in relation to the expansion bench.

Alternatively, after the mounting step between pipes, a heating step is performed by induction of the outer and inner pipes, synchronizedly with a mechanical expansion step. In this case, before the step of mounting the pipes, a step of lubrifying at least the inner surface of the inner pipe with a lubricant preferably based on a mixture of water and graphite is performed .The process may comprise after at least one mechanical expansion step, a heating by induction step of the inner and outer pipes, synchronizedly with at least one additional hot mechanical expansion step. Alternatively, in the heating step, an electromagnetic induction coil is disposed externally to the outer and inner pipes and moves longitudinally relative to the outer and inner pipes, synchronizedly with the displacement of the mandrel. Alternatively, in the at least one mechanical expansion step, the mandrel is moved longitudinally and internally in the inner pipe while the outer pipe and the inner pipe are held at a fixed position.

In the heating step, alternatively a heating device is disposed internally to the outer and inner pipes and moves longitudinally relative to the outer and inner pipes together with the rod of the mandrel.

The process may further comprise, after the expansion step, a step of bending the multilayer pipe.

The mandrel preferably has the shape of a truncated cone, whose minimum diameter is smaller than the internal diameter of the inner pipe and the maximum diameter is greater than the internal diameter of the inner pipe, causing an adequate elastic deformation of the external pipe during the extrusion process.

After the mounting step, a step of welding the ends of both pipes together and generating a vacuum between the inner and outer pipes may be performed.

During the mechanical expansion step, a step of applying a flux of an inert gas between the inner and outer pipes may be performed.

According to the invention the outer pipe consists of a carbon manganese steel alloy and the inner pipe consists of of a corrosion-resistant alloy. The inner pipe may be made of a i corrosion-resistant alloy comprising at least one of low alloy steel, high alloy steel, stainless steel, nickel base alloy, titanium base alloy, cobalt base alloy, copper base alloy, tin base alloy and zirconium base alloy. The outer and inner pipes are preferably seamless pipes. The multilayer pipe may comprise a layer of corrosion-resistant alloy disposed externally to the outer pipe formed of a second outer pipe having an internal diameter larger than the external diameter of the underlying pipe. This second outer pipe preferably has a yield strength greater than the yield strength of the underlying outer pipe.

### Brief Description of the Drawings

The present invention will be further described in more details based on one example of execution represented in the drawings. The figures show:
Figure 1 - a schematic view of an embodiment of the expansion step of the process for producing a multilayer pipe by expansion of the present invention;
Figure 2 - a stress-strain engineering diagram before, during and after an expansion step of the process of the present invention;
Figure 3 - a block diagram showing a first embodiment of the process of the present invention;
Figure 4 - picture of the interface between the pipes in an embodiment of the cold-formed multilayer pipe in the process of the present invention, associated with a diagram of the concentration of the iron and nickel elements in the interface between the outer and inner pipes;
Figure 5 - picture of the interface between the pipes in an embodiment of the hot-formed multilayer pipe in the process of the present invention, associated with a diagram of the concentration of the iron and nickel elements in the interface between the pipes; and
Figure 6 - a block diagram showing a one embodiment of the process of the present invention.

### Detailed Description of the Drawings

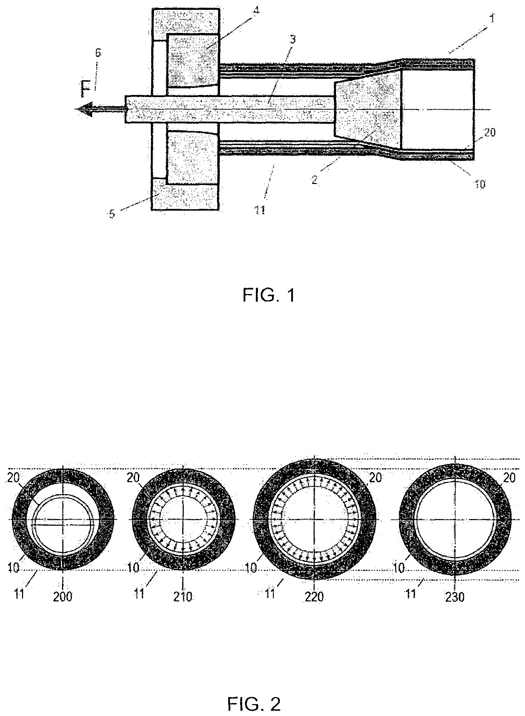

As illustrated in Figure 1, the process for producing multilayer pipes according to the present invention is based on the mechanical expansion of two or more metal pipes, one inserted inside the other, so that the pipe produced by the process comprises at least one external layer made from an outer pipe and one internal layer made from an inner pipe.

When only cold expansion is performed, the multilayer pipes produced by this process are lined pipes, so that the at least two metal pipes are attached together only by a mechanical bond. When hot expansion is performed, a metallurgical bond is formed between the at least two pipes in at least a portion of their interface.

The multilayer pipe produced by this process may be a clad pipe, when the bonding between the layers forming the multilayer pipe meets the minimum requirements of norms ASTM A578 and API 5LD, that is, any non-clad area on the surface of the pipe may not exceed a diameter of 25mm inside a scanned area of a 225 by 225mm square centered on an indication of a discontinuity. Moreover, the pipe should not have any non-clad area within a distance of 100mm from the pipe end. According to the present invention, the clad pipe may be manufactured by the process according to the invention with up to 100% cladding between the outer pipe 10 and the inner pipe 20.

In the aspect of the invention shown in Figures 1-6, the multilayer pipe 1 is manufactured only from an outer pipe 10 of metallic material and an inner pipe 20 of metallic material, wherein the inner pipe 20 has a smaller elastic return than the elastic return shown by the outer pipe 10 when both are deformed. In addition, the inner pipe 20 preferably has a yield strength (YS) lower than the yield strength of the outer pipe 10.

The inner pipe 20 has an external diameter smaller than the internal diameter of the outer pipe 10, as may be seen at the bottom of the diagram in Figure 2. Preferably, there is a clearance between the outer pipe and the inner pipe to facilitate their engagement.

The inner pipe 20 and the outer pipe 10 are preferably seamless, so as to prevent the multilayer pipe produced from having seams on its surface. Thus, the multilayer pipes having at least a cladded part and/or the lined pipes produced by the process according to the invention are also seamless. In alternative embodiments of the invention, the outer pipe 10 may be a seamless pipe, and the inner pipe 20 may be a welded seam pipe. However, other types of seam pipes may be used within the scope of the present invention. The multilayer pipe may also be manufactured from three or more pipes, one being disposed inside the other and subjected to mechanical expansion forming which is described herein.

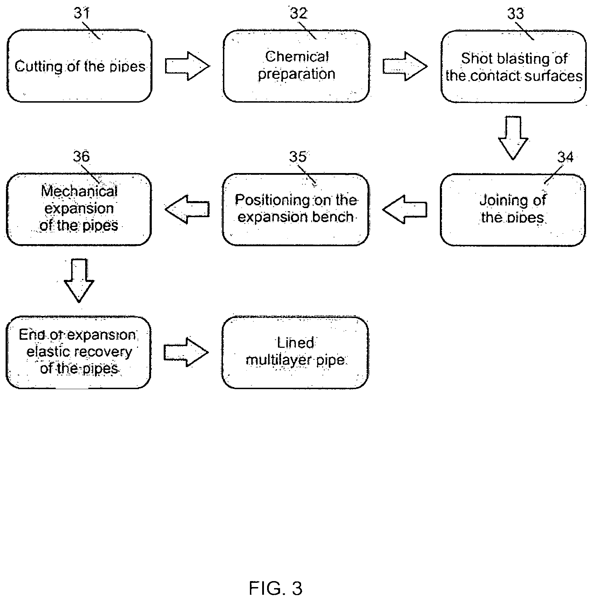

Figure 3 shows a detailed flowchart of a preferred embodiment of the process according to the invention. Initially, it may be necessary to have steps for preparing the outer and inner pipes before the expansion. These initial preparation steps include, for instance, the straightening of the pipes and flattening of the pipe surfaces so that they are straight and not oval, thus facilitating a later step of inserting one pipe inside the other, because the walls of the outer and inner pipes will be parallel.

Then, if needed, the outer pipe 10 and the inner pipe 20 are measured and cut in length, which may vary according to the resources and tools available, such as the length of the rod and the capacity of the expansion bench. Then, the process according to the invention preferably comprises the steps of chemical preparation 32 of the pipes, which leads to cleaner surfaces and facilitates the expansion step, contributing to a better performance, because they reduce friction between the pipe and the expansion mandrel. Chemical preparation is particularly applied to the inner surface of the inner pipe 20, which will be in contact with the mandrel 2 during expansion. This complete chemical preparation may also be applied to both the internal surface of the inner pipe and the external surface of the outer pipe, since after this step, no protection is required for the pipe surfaces, and it also improves the final quality of the pipe.

Initially, acid pickling of at least the inner surface of the inner pipe 20 is performed to remove oxides and impurities. Preferably, also the surfaces of the interface of the tubes (outer surface of the inner tube and inner surface of the outer tube) are also subjected to acid pickling, in order to achieve better surface quality and better conection between them. However, when the step of acid pickling is performed by submerging the tubes in an acid solution for practical reasons, then both surfaces of both tubes may be subjected to this step.

Then, at least the inner surface of the inner pipe 20 is neutralized and washed to receive a deposit of lubricant. Also for practical reasons, the steps of neutralizing and washing the tubes may be performed on both surfaces of both tubes.

The lubricant is usually applied to the inner surface of the inner pipe. In general, the lubricant may be soap, mineral oils and other lubricants capable of achieving lower friction conditions, depending on the other process variables, such as the force of the expansion carriage 6, deformation applied, geometry of the tools.

According to one embodiment of the invention, an oxalate layer may be applied before the deposition of the lubricant. This oxalate layer reacts with the metal inner surface of the inner pipe, creating the conditions for applying a reactive lubricant on the same, which is responsible for the decreased friction between the expansion tool and the pipe during its passage through the pipe. Thus, other materials may be applied to the pipes at this step, as long as they also provide a good conection between the pipe and the lubricant. When the oxalate layer is applied, preferably the deposited lubricant used is reactive soap. Alternatively, a reactive oil may be used as the lubricant. In this case, usually there is no need to apply oxalate before applying the lubricant. Also according to an advantageous embodiment of the invention, a step of shot-blasting 33 the inner surface 33 of the outer pipe 10 and the outer surface of the inner pipe 20 is performed which will be mechanically connected together by the expansion process. These surfaces are preferably blasted in order to increase their roughness and optimize the contact force between the materials, thus improving the mechanical bonding between the pipes. The shot-blasting is preferably carried out with steel shots, due to the similarity with the material to be blasted and lower cost, but other types of shots may also be used.

The steps of chemical treatment and shot-blasting respectively contribute to facilitate the process for producing pipes and improve the quality of the final product, but are not essential in the process of the invention.

The inner pipe 20 is then inserted inside the outer pipe 10 in a stage of initial mounting 34 between the pipes 10, 20, so that they can be expanded together. This mounting step may be done automatically or manually, in which case the fit between the pipes must provide sufficient clearance.

According to alternative embodiments of the invention, after the pipes are mounted together, the process may comprise additional steps intended to eliminate or minimize the presence of oxygen between the inner and outer pipes, in order to avoid a formation of oxides in this interface, and thereby providing a better conection between the pipes.

One possibility is to weld the ends of both pipes together and to generate a vacuum between the inner and outer pipes. The vacuum may be generated, for exemple, through a hole and a vaccum pump. Thereby the oxygen would be eliminated from between the pipes.

Another possibility would be to apply a flux of an inert gas between the inner and outer pipes during the cold expansion step or the hot expansion step, but without the need of welding the pipes ends, in order to assure that the gas remaining between them is not oxygen. Then, the outer pipe 10 and the inner pipe 20 mounted together are subjected to at least one mechanical expansion step 36. In this step (both in case of hot and cold expansion, as will be explained below), a relative movement is provided between the mandrel 2 and the mounted pipes in the longitudinal direction, with the mandrel being positioned internally in the inner pipe 20.

In this step, according to one embodiment of the invention, a mandrel 2 is moved longitudinally within the inner pipe 20, while both inner pipe 20 and the outer pipe 10 are held in a fixed position. For the expansion of these pipes, it is necessary that the external diameter of the mandrel 2 is greater than the internal diameter of the inner pipe 10, as illustrated in Figure 1. According to this embodiment of the invention, the step of expansion may be carried out on an expansion bench, in which the outer pipe 10 and the inner pipe 20 mounted together are positioned with one of their ends supported on an expansion die 4 as can be seen in Figure 1. According to another embodiment of the invention, the mandrel is maintained in a fixed position, for example, in an expansion bench, and the pipes are displaced longitudinally relative to the mandrel.

The maximum diameter of expansion die opening 4 is smaller than the nominal diameter of the inner pipe 20. Thus, the outer 10 pipe and the inner pipe 20 mounted together have their axial movements restricted, remaining fixed throughout the mechanical expansion step. An expansion die support 5 secures the expansion die 4 to the expansion bench.

The mandrel 2 has a shape of a truncated cone, and its smaller end has a diameter smaller than the internal diameter of the inner pipe. Thus, the smaller end of the mandrel 2 can be inserted into the one end of the assembly of the inner pipe 20 and outer pipe 10, so that the mandrel is then moved longitudinally within the pipes. The larger portion of the mandrel 2 has a diameter greater than the internal diameter of the inner pipe 10, in order to achieve the expansion of the pipes, causing an adequate elastic deformation of the external pipe during the extrusion process. The mechanical expansion step occurs with the passage with interference of mandrel 2 along the length of the inner pipe 20 and the outer pipe 10 mounted together, moving longitudinally with respect to the expansion die support 5. A force of the expansion carriage 6 is applied onto a rod 3 fixed to the mandrel 2, being responsible for this movement. A multilayer pipe 1 is obtained after mechanical expansion. Thus, the mandrel will cause deformation on the wall thickness of the inner pipe, and the expansion of inner pipe will cause deformation on the wall thickness of the outer pipe.

The cold expansion step is preferably performed 1 to 10 times, at a speed varying from 0,2 - 20,0 m/min and at room temperature. The deformation applied to the inner pipe varies from 0,1 - 20,0% and the deformation applied to the outer pipe also varies from 0,1 - 20,0%.

This mechanical expansion step shown in the process of the present invention has the advantage of reducing the effort required by the expansion carriage, since the outer pipe 10 and the inner pipe 20 mounted together remain fixed throughout the process and only rod 3 moves, and the inertia of rod 3 and mandrel 2 is much lower than inertia of the assembly of the outer pipe 10 and the inner pipe 20 or the final multilayer pipe 1. This reduction in effort results in a reduction of energy consumption of the expansion bench and of the process as a whole.

In the stress-strain engineering diagram shown in Figure 2 the behaviors of the outer and inner pipes are shown before, during and after the stage of expansion of the pipes by varying the cross sections of the pipes. As can be seen in this figure, in an early stage prior to the forming step 200, the inner pipe 20 is disposed within the outer pipe 10, both pipes being shown with their initial diameters and there being a clearance between these diameters. From the point 200 forward, the mandrel 2 begins to be displaced inside the inner pipe 20, causing it to expand and abut the inner surface of the outer pipe 10 at position 210 of the diagram, and then expand the outer pipe, also as shown in position 220 of the diagram. In this position, the outer pipe 10 and the inner pipe 20 have their maximum diameters during the process. Typically, in this process of expansion, the inner pipe 20 undergoes a plastic deformation, while the outer pipe 10 undergoes only elastic deformation. After completion of the passage of the mandrel 2, there is an elastic return of the pipes shown in position 230 of the graph, in which the pipes slightly constrict. This elastic return is characteristic of each material and more particularly of its yield strength (YS), resulting in a reduction of the diameter of the outer pipe 10 and the inner pipe 20. As the metallic material of the outer pipe 10 has a greater elastic return than the elastic return presented by the inner pipe 20 when both are deformed, and preferably also has a yield strength (YS) greater than the material constituting the inner pipe 20, the return of the outer pipe 10 tends to be greater than the return of the inner pipe 20. However, in the present invention, the return of the outer pipe 10 is limited by the return of the inner pipe 20 located therein. Thus, the residual stress of the inner pipe 27 is compressive and the residual stress of the outer pipe 28 is tractive. Thus, the inner pipe 20 presses the outer pipe radially outward and vice versa, providing a contact force between the pipe and, consequently, a mechanical bond between them, forming a multilayer pipe. In this embodiment of the invention in which there is cold expansion, the final pipe is a lined pipe.

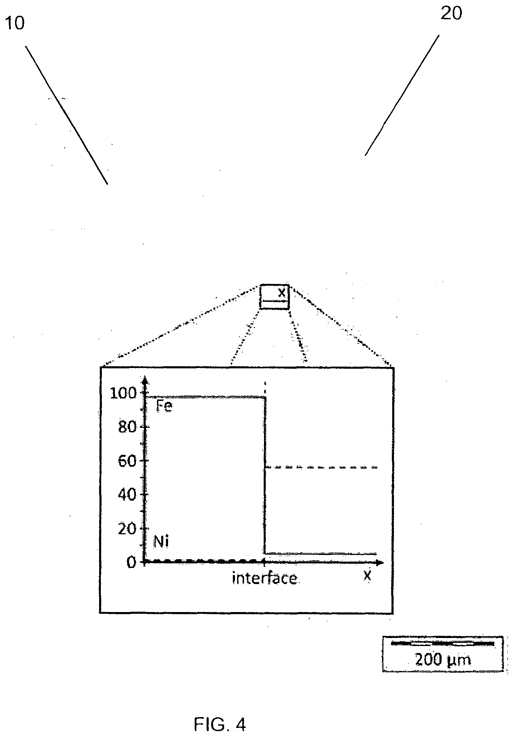

The mechanical bond between the outer pipe 10 and the inner pipe 20 constituting the lined pipe 1 according to an example of the product of the invention can be seen in Figure 4. This figure contains a microscopic cross-sectional picture of the interface of the junction between the pipes, wherein the outer pipe 10 is shown on the left side in a darker shade of gray and the inner pipe 20 is shown on the right side in a lighter shade of gray. The interface between the pipes in a section corresponding to the upper smaller box is represented in terms of the concentration of the materials of both pipes in the diagram below it. This diagram is an enlarged version of said interface section, in which the ordinate axis represents the concentration of each element in mass percent and the abscissa represents the position in the lined pipe in the direction perpendicular to the interface. The diagram shows the concentration of the elements iron (Fe) and nickel (Ni) in the X direction in the interface region between the pipes in the lined pipe. The solid line represents the concentration of iron which, according to one embodiment of the invention, is one of the main constituents of the outer pipe 10. The dashed line represents the concentration of nickel in this interface region, wherein nickel is a major element of the inner pipe 20 according to this embodiment of the invention. The abrupt change of the concentration of iron and nickel occurs in the same position of the graph representing the interface region between the pipes. This means that there was no remarkable diffusion between the materials of the two pipes, so that there is only a mechanical bond between them, with no metallurgical bond, that is, no cladding.

As can be noticed, the process according to the present invention is capable of producing lined pipes with mechanical bond between the outer pipe and the inner pipe only by cold expansion without the need for heating the pipes.

The process of the present invention may comprise more than one step of mechanical expansion, depending on the end product that is desired. Several steps of cold expansion may be carried out, or a combination of cold expansion followed by hot expansion, or only hot expansion.

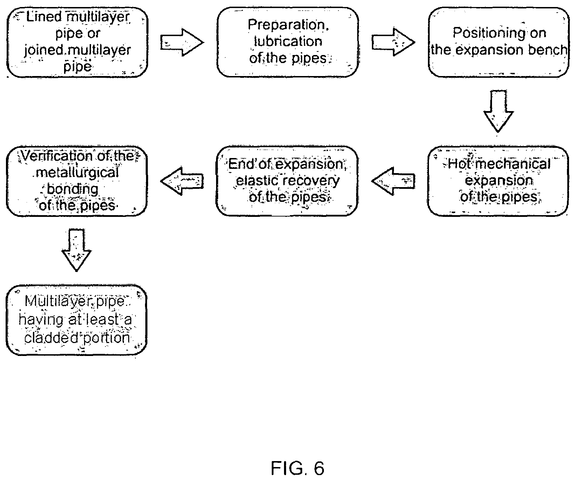

The embodiment of the invention in which the process carries out the hot expansion of the pipe is shown in Figure 6. In this case, an additional step is performed consisting on heating the inner pipe 20 and the outer pipe 10 mounted together. Heating may be performed by various heating devices that can be operated in the production line of the pipe, for example, by being displaced along the pipe synchronously with the expansion mandrel.

In the cases of hot mechanical expansion, the steps involved in the chemical preparation described above are replaced by a step of applying a lubricant in order to reduce the friction resulting from contact of the tubular element with the expansion die and with the mandrel. The lubricant used is preferably based on a mixture of water and graphite, or any lubricant for high-temperature processes, like the hex- α-BN. This lubricant has the advantage that it does not modify the surface chemical composition of the pipes. The lubricant may be applied by submerging the tube therein, spraying, painting or any other process assuring that a layer of lubricant is formed in the inner surface of the inner tube.

In one embodiment of the invention, heating is carried out by means of an electromagnetic induction coil. The electromagnetic induction coil is disposed externally to the outer pipe 10 and the inner pipe 20 mounted together and moves longitudinally relative to the outer and inner pipes, synchronizedly with the displacement of the mandrel 2, while the pipes are held in a fixed position. If the pipes are fixed on an expansion bench, the coil will move longitudinally also in relation to the expansion die. The mounted pipes enter the coil at ambient temperature, and after being subjected to a magnetic field, are heated by Joule effect (electric current circulating in the steel constituting the pipes) reaching a minimum temperature of 900°C at the exit of the coil. Alternatively, in an embodiment not shown in the drawings, the pipes are heated by an internal heating device, which moves inside the pipe with the rod 3 of the mandrel promoting heating from the inner surface of the inner pipe. This internal heating device may also be a coil or another heating device. The internal heating depends on the dinamic heating conditions of the material during the expansion step.

According to another alternative of the invention, the mandrel and the heating device, such as the heating coil, are maintained in a fixed position in series, and the pipes are displaced through them, passing first through the heating device, and then through the mandrel.

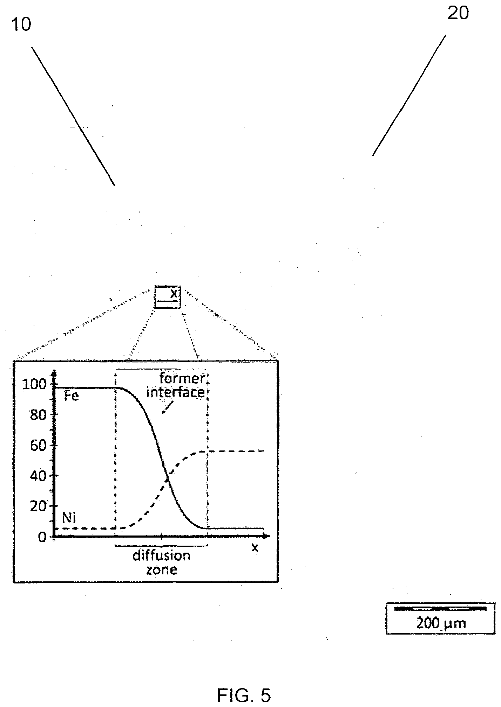

At the end of this hot expansion step a clad pipe is obtained, which has a metallurgical bond between the outer pipe 10 and the inner pipe 20, as can be seen in Figure 5. This hot expansion step can be performed alone or after at least one step of cold expansion.

The hot expansion step is preferably performed 1 to 5 times, at a speed varying from 0,1 - 5,0 m/min and at a temperature varying from 800 - 1300°C.

Figure 5 contains a microscopic cross-sectional picture of the interface of the junction between the inner and outer pipes after cladding, according to an exemplary product of the invention, wherein the outer pipe 10 is shown on the left side in a darker shade of gray and the inner pipe 20 is shown on the right side in a lighter shade of gray. In the final pipe having at least a partial a metallurgical bond 1, the interface between the inner pipe and the outer pipe in the cladded areas is extinguished, characterizing metallurgical bonding. The interface between the pipes in a section corresponding to the upper smaller box is represented in terms of the concentration of the materials of both pipes in the diagram below it. This diagram is an enlarged version of said interface section, in which the ordinate axis represents the concentration of each element in mass percent and the abscissa represents the position inside the clad pipe. As in Figure 4, this diagram shows the concentration of the elements iron (Fe) and nickel (Ni) along the X direction in the interface region between the pipes in the clad pipe. The solid line represents the concentration of iron, representing the outer pipe 10, and the dashed line corresponds to the concentration of nickel representing the inner pipe 20 according to one embodiment of the invention. Note that the variation of concentration of iron and nickel is smoother, providing a diffusion zone in which the two mentioned elements and thereby the materials of inner and outer pipes mix.

This means that there was metallurgical bonding, that is, cladding between the pipes. A thicker and more homogeneous diffusion zone commonly leads to a better cladding.

The use of an electromagnetic induction coil for heating of the pipe is advantageous because it allows for rapid and homogenous heating of the pipe by means of dynamic control of the coil power parameters, traction force and speed of the mandrel, which are variable during the process. Furthermore, heating with this coil simultaneously with the expansion step provides higher heating rates than those obtained by other heating means. These high heating rates prevent a possible grain growth, which might occur during a conventional heating if the material is exposed for a long time at high temperatures.

Another advantage of induction heating accomplished in the present invention is that the electromagnetic induction coil is easy to install on the line, and this movable coil eliminates the need for handling hot pipes and moving the equipments, which has a direct impact on safety. Moreover, the induction heating eliminates the need to burn fuel gas for heating the pipes in furnaces, and thus eliminates the need for treating potentially polluting emissions.

After hot expansion, a step of bending the multilayer pipe may also be performed, not shown in the drawings. This bending may be performed cold, hot or by folds, not being limited to these methods.

In one embodiment of the manufacturing process, comprising a cold forming step followed by a hot forming step, the cold-formed pipes, called lined pipes, serve as raw material for the manufacture of hot-formed pipes, which are multilayer pipes having at least a cladded part. Obtaining a good mechanical bond during the cold stage helps to ensure a good cladding during the hot forming step.

In alternative embodiments of the invention, when hot expansion is performed, a multilayer pipe of the lined type may be initially used, obtained by other known process for the production of lined pipes. Alternatively, one can carry out only the hot expansion step, without the need for a previous cold forming step.

In the embodiment of the invention in which a cold-forming step is performed followed by a hot-forming step, the process preferably comprises a step of preparing the multilayer pipe carried out after the cold expansion step and before the hot expansion step.

At this stage of preparing the multilayer pipe, the bond between the lined pipe materials may be verified and the multilayer pipe produced by cold expansion may be straightened and the pipe dimensions may be calibrated. The steps of straightening of the pipes and calibration of the pipe dimensions may preferably be performed through cold-co-drawing, which provides a better dimensioning and improves the surface quality of the pipes.

If necessary, a lubricant is applied to the inner surface of the multilayer pipe, which will come again in contact with the mandrel in the additional mechanical expansion step.

When the process of the present invention uses seamless pipes as a raw material for the multilayer pipe, there is no need for a welding process to obtain a pipe, which is usually employed when the pipe is produced from another form of sheet metal. Thus, the multilayer pipes of the present invention preferably are seamless, featuring homogeneous materials in any radial section. However, in principle, the process also applies to longitudinally welded pipes.

The process according to the invention may further comprise heat treatment steps after the hot expansion steps, with the purpose of adjusting material properties. These heat treatment steps depend on the mechanical, metallurgical and corrosion properties of the clad pipe 1 that may need adjustment. Some materials may lose some of their mechanical, metallurgical and corrosion properties during the production steps. These additional thermal treatments may, therefore, be performed, in order to restore the mechanical and metallurgical properties of the pipe, for example, when the pipes 10 and 20 are made of X65 steel and Inconel®. In preferred embodiments of the invention, in the heat treatment step, the multilayer pipe having at least a portion of metallurgical bond is subjected to a cooling or a quenching and tempering step, which contributes to adjusting the mechanical, metallurgical and corrosion properties of the pipe.

The process of the present invention may also comprise a verifying step of the metallurgical bond between the pipes, for confirmation that cladding occurred. The verification may be destructively by cutting a section of the pipe, for example, at intervals of 90° to verify whether in all of these pieces the outer and inner pipes remain attached. Verification can also be non-destructively, through inspection by Ultrassonic testing, analysis of the microstructure, cross sectional analysis of the interface, SEM/EDX or GDOES testing, among others, to check if a metallurgical clad was obtained at least in a part of the pipe produced by the process according to the invention.

The process according to the present invention has a much higher performance when compared with the processes of the prior art, since it does not require any displacement of the pipe or of the inner and outer pipes within the manufacturing installations other than the expansion equipment itself. And in view of the simplicity of the process and the reduced number of steps, it is possible to produce a high amount of lined and/or clad pipes within a small period, with an estimated productivity higher than 100 m/h. Multilayer pipes obtained by the process according to the present invention are manufactured from at least one outer pipe 10 of metallic material and one inner pipe 20 of metallic material, wherein the inner pipe 20 has a smaller elastic return than the elastic return shown by the outer pipe 10 when both are deformed. Since these pipes are usually used in environments related to the oil industry, which are highly corrosive and subjected to strong mechanical stress, the outer pipe 10 is made of metallic material composed of a carbon manganese steel alloy to provide the required mechanical strength to the multilayer pipe. The inner pipe 20 is made of metallic material resistant to corrosion.

According to one embodiment of the invention, the outer pipe 10 may have the following chemical composition:
C ≤ 0,30
Mn ≤ 1,40
P ≤ 0,030
S ≤ 0,030
Cu ≤ 0,5
Cr ≤ 0,5
Ni ≤ 0,5
Mo ≤ 0,15
Nb+V+Ti ≤ 0,15
and the following mechanical properties before and after the process according to the invention (YS = yield strength and UTS = tensile strength):
360 MPa < YS < 830 MPa
455 MPa < UTS < 935 MPa
minimum elongation εmin = 15%.

The corrosion-resistant alloy of the inner pipe comprises at least one of the materials among low alloy steel, high alloy steel, stainless steel, nickel base alloy, titanium base alloy, cobalt base alloy, copper base alloy, tin base alloy and zirconium base alloy, not being limited to the abovementioned materials. The corrosion level of the corrosion-resistant alloys according to the invention are tested in environment levels I - VII of the International Standard NACE MR0175, wherein the precise corrosion level in each case will depend on the internal material thereof.

The selection of the material of the inner pipe 20 and the outer pipe 10 should preferably observe the criterion of the outer pipe having a higher yield strength compared to the inner pipe, said criterion being important to ensure a good mechanical bond.

In an alternative embodiment of the invention, the multilayer pipe further comprises a layer of corrosion-resistant alloy disposed externally to the outer pipe. This layer of material resistant to external corrosion consists of a second outer pipe having an internal diameter greater than the external diameter of the underlying pipe 10. Preferably, the layer of material resistant to external corrosion has a yield strength greater than the yield strength of the outer pipe 10. Thus, in the pipe manufacturing process of the present invention, this outer pipe of material resistant to corrosion is also subjected to cold or hot expansion and is attached by a mechanical or metallurgical bond, depending on the expansion performed.

The clad pipe produced according to the invention meets the minimum requirements of norms ASTM A578 and API 5LD as described above, and may achieve up to 100% cladding between the outer pipe 10 and the inner pipe 20.

The dimensions of the multilayer lined or clad pipe produced by the process of the present invention will depend on the application thereof. According to one embodiment of the present invention, the pipes may have an external diameter dext varying from 50,80 mm < dext < 355,6 mm, and a wall width WT varying from 5,0 mm < WT < 30,0 mm, wherein the minimum wall thickness of the pipe of the corrosion resistant alloy for linepipe applications is WTminCRA = 2,50 mm.

The total deformation values of the final pipe when compared to the initially assembled pipes before the production process according to the invention are the following:
External diameter deformation: 0,1 to 20%

Wall thickness deformation: 0,1 to 1.40%. The process for producing multilayer pipes, object of the present invention, differs from the prior art because it produces lined pipes by mechanical cold-forming in an economical manner, substantially reducing the effort in the expansion process.

The multilayer pipe obtained by the present invention also has the advantage of being a preferably seamless pipe, which gives the product a higher degree of isotropy and less risk of failure in weld sections.

In the production of clad pipes using hot expansion, the present process differs from the prior art for dispensing with the steps of welding, post heating and finishing by pressing, rolling or other methods of mechanical forming aiming to improve the dimensional quality and the mechanical strength of the final product.

The lined or clad pipes obtained by the process according to the present invention have properties that meet international standards for lined and clad pipes. However, the process provides a simpler implementation and reduced cost when compared to other processes of the prior art.

The example described above represents a preferred embodiment; however, it should be understood that the scope of the present invention encompasses other possible variations, and is limited only by the content of the appended claims:

## Claims

1. A process for producing a multilayer pipe by expansion, wherein the multilayer pipe comprises at least one external layer made from an outer pipe of metallic material and an internal layer made from an inner pipe of metallic material the inner pipe having an elastic return smaller than the elastic return of the outer pipe when both are deformed and having an external diameter smaller than the internal diameter of the outer pipe; said process comprising the steps of:
mounting the pipes, wherein the inner pipe is inserted inside the outer pipe;
joining the inner pipe and the outer pipe together in a first mechanical expansion, which
comprises providing a relative movement between a mandrel and the mounted pipes in a longitudinal direction, with the mandrel being located internally in the inner pipe, wherein
at least part of the mandrel has a greater external diameter than an internal diameter of the inner pipe, wherein in the first mechanical expansion, the mandrel causes plastic deformation of a wall thickness of the inner pipe,
said process being **characterized in that**:
the outer pipe of metallic material consists of a carbon manganese steel alloy and the inner pipe of metallic material consists of a corrosion-resistant alloy;
in the first mechanical expansion the expansion of the pipe causes only elastic deformation of a wall thickness of the outer pipe, wherein an external diameter deformation of 0.1 to 20% and a wall thickness deformation of 0.1 to 40% is provided to the mounted pipes together when comparing the total deformation values of the final pipe to the initially assembled pipes before the production process.

2. The process, according to claim 1, **characterized by**, before the mounting of the pipes, a chemical preparation, comprising:
acid pickling of at least an inner surface of the inner pipe;
neutralizing and washing of at least the inner surface of the inner pipe and applying a lubricant on the inner surface of the inner pipe.

3. The process, according to claim 2, **characterized in that** applying lubricant comprises applying an oxalate layer and a reactive soap, or applying a reactive oil.

4. The process, according to one of claims 1 to 3, **characterized by** comprising before the mounting of the pipes, shot-blasting on an inner surface of the outer pipe and on an outer surface of the inner pipe.

5. The process, according to one of claims 1 to 4, **characterized by** comprising after the mounting of the pipes, a positioning, in which the outer pipe and the inner pipe mounted together are disposed with one end of the mounted pipes supported on an expansion die and are fixed in relation to an expansion bench.

6. The process, according to one of claims 1, 4 or 5, **characterized by** comprising after the mounting between pipes, a heating by induction of the outer pipe and of the inner pipe, synchronizedly with the i first mechanical expansion.

7. The process, according to claim 6, **characterized by** comprising lubrifying at least an inner surface of the inner pipe with a lubricant based on a mixture of water and graphite.

8. The process, according to one of claims 1 to 7, **characterized by** comprising, after the first mechanical expansion, a heating by induction of the outer pipe and of the inner pipe synchronizedly with at least one additional hot mechanical expansion.

9. The process, according to one of claims 6 to 8, **characterized in that** during the heating, an electromagnetic induction coil is disposed externally to the outer pipe and the inner pipe and moves longitudinally relative to the outer pipe and the inner pipe synchronizedly with displacement of the mandrel.

10. The process, according to one of claims 6 to 8, **characterized in that** during the heating, a heating device is disposed internally to the outer pipe and the inner pipe and moves longitudinally relative to the outer pipe and the inner pipe together with the rod of the mandrel.

11. The process, according to one of claims 6 to 10, **characterized by** comprising, after the mechanical expansion, a bending of the multilayer pipe.

12. The process, according to one of claims 1 to 11, **characterized in that** the mandrel has the shape of a truncated cone, a maximum diameter of which is greater than the internal diameter of the inner pipe and a minimum diameter is smaller than the internal diameter of the inner pipe.

13. The process, according to one of claims 1 to 12, **characterized by** comprising, after the mounting of the pipes, welding ends of both pipes together and generating a vacuum between the inner and outer pipes.

14. The process, according to one of claims 1 to 12, **characterized by** comprising, during the first mechanical expansion, applying a flux of an inert gas between the inner and outer pipes.

15. The process, according to one of claims 1 to 14, **characterized in that** during the first mechanical expansion, the mandrel is moved longitudinally and internally in the inner pipe while the outer pipe and the inner pipe are held at a fixed position.

16. The process, according to one of claims 1 to 14, **characterized in that** during the first mechanical expansion, the mandrel is held at a fixed position while the outer pipe and the inner pipe are moved longitudinally in relation to the mandrel.

17. The process, according to claim 2, further comprising, before the mounting the pipes, a chemical preparation, comprising:
acid pickling of an outer surface of the inner pipe and an inner surface of the outer pipe;
neutralizing and washing of the outer surface of the inner pipe and the inner surface of the outer pipe.

## Patentansprüche

1. Verfahren zur Herstellung eines mehrschichtigen Rohres durch Expansion, wobei das mehrschichtige Rohr mindestens eine äußere Schicht, die aus einem äußeren Rohr aus metallischem Material gefertigt ist, und eine innere Schicht, die aus einem inneren Rohr aus metallischem Material gefertigt ist, umfasst, wobei das innere Rohr eine elastische Gegenkraft aufweist, die geringer ist als die elastische Gegenkraft des äußeren Rohres, wenn beide verformt werden, und einen Außendurchmesser aufweist, der kleiner als der Innendurchmesser des äußeren Rohres ist;
wobei das Verfahren die folgenden Schritte umfasst:
Montieren der Rohre, wobei das innere Rohr in das äußere Rohr eingeführt wird;
Verbinden des inneren Rohres und des äußeren Rohres miteinander in einer ersten mechanischen Expansion, die das Bereitstellen einer relativen Bewegung zwischen einem Dorn und den montierten Rohren in einer Längsrichtung bereitstellt, wobei sich der Dorn im Inneren des inneren Rohres befindet, wobei mindestens ein Teil des Dorns einen größeren Außendurchmesser als ein Innendurchmesser des inneren Rohres aufweist, wobei der Dorn bei der ersten mechanischen Expansion eine plastische Verformung einer Wanddicke des inneren Rohres bewirkt;
wobei das Verfahren **dadurch gekennzeichnet ist, dass**:
das äußere Rohr aus metalischem Material aus einer Kohlenstoff-Mangan-Stahllegierung besteht und das innere Rohr aus metalischem Material aus einer korrosionsbeständigen Legierung besteht;
die Expansion des inneren Rohres bei der ersten mechanischen Expansion nur eine elastische Verformung einer Wanddicke des äußeren Rohres bewirkt,
wobei eine Verformung des Außendurchmessers von 0,1 bis 20% und eine Verformung der Wanddicke von 0,1 bis 40% für die montierten Rohre gemeinsam bereitgestellt wird, wenn die Gesamtverformungswerte des endgültigen Rohres mit den ursprünglichen zusammengesetzten Rohren vor dem Produktionsverfahren verglichen werden.

2. Verfahren nach Anspruch 1, vor dem Montieren der Rohre durch eine chemische Vorbereitung gekennzeichnet, Folgendes umfassend:
Säurebeizen mindestens einer Innenfläche des inneren Rohres;
Neutralisieren und Waschen von mindestens der Innenfläche des inneren Rohres und Aufbringen eines Schmiermittels auf die Innenfläche des inneren Rohres.

3. Verfahren nach Anspruch 2, **dadurch gekennzeichnet, dass** das Aufbringen von Schmiermittel das Aufbringen einer Oxalat-Schicht und einer reaktiven Seife oder das Aufbringen von reaktivem Öl umfasst.

4. Verfahren nach einem der Ansprüche 1 bis 3, **dadurch gekennzeichnet, dass** es vor dem Montieren der Rohre Kugelstrahlen einer Innenfläche des äußeren Rohres und einer Außenfläche des inneren Rohres umfasst.

5. Verfahren nach einem der Ansprüche 1 bis 4, **dadurch gekennzeichnet, dass** es nach dem Montieren der Rohre eine Positionierung umfasst, bei dem das äußere Rohr und das innere Rohr, die miteinander montiert sind, mit einem Ende der montierten Rohre an einem Expansionsstein angelegt angeordnet werden und in Bezug auf eine Expansionsbank befestigt werden.

6. Verfahren nach einem der Ansprüche 1, 4 oder 5, **dadurch gekennzeichnet, dass** es nach dem Montieren zwischen Rohren ein Erhitzen des äußeren Rohres und des inneren Rohres durch Induktion, synchronisiert mit der ersten mechanischen Expansion umfasst.

7. Verfahren nach Anspruch 6, **dadurch gekennzeichnet, dass** es das Schmieren mindestens einer Innenfläche des inneren Rohres mit einem Schmiermittel basierend auf einem Gemisch aus Wasser und Grafit umfasst.

8. Verfahren nach einem der Ansprüche 1 bis 7, **dadurch gekennzeichnet, dass** es nach der ersten mechanischen Expansion ein Erhitzen des äußeren Rohres und des inneren Rohres, synchronisiert mit mindestens einer zusätzlichen warmen mechanischen Expansion umfasst.

9. Verfahren nach einem der Ansprüche 6 bis 8, **dadurch gekennzeichnet, dass** während des Erhitzens eine elektromagnetische Induktionsspule außerhalb des äußeren Rohres und des inneren Rohres angeordnet wird, und sich längs in Bezug auf das äußere Rohr un das innere Rohr synchronisiert mit der Verschiebung des Dorns bewegt.

10. Verfahren nach einem der Ansprüche 6 bis 8, **dadurch gekennzeichnet, dass** während des Erhitzens eine Erhitzungsvorrichtung innerhalb des äußeren Rohres und des inneren Rohres angeordnet wird und sich längs in Bezug auf das äußere Rohr und das innere Rohr gemeinsam mit der Stange des Dorns bewegt.

11. Verfahren nach einem der Ansprüche 6 bis 10, **dadurch gekennzeichnet, dass** es nach der mechanischen Expansion ein Biegen des mehrschichtigen Rohres umfasst.

12. Verfahren nach einem der Ansprüche 1 bis 11, dadurrch gekennzeichnet, dass der Dorn die Form eines Kegelstumpfes aufweist, dessen maximaler Durchmesser größer als der Innendurchmesser des inneren Rohres ist, und ein minimaler Durchmesser kleiner als der Innendurchmesser des inneren Rohres ist.

13. Verfahren nach einem der Ansprüche 1 bis 12, **dadurch gekennzeichnet, dass** es nach dem Montieren der Rohre das Schweißen der Enden von beiden Rohren zusammen, und das Erzeugen eines Vakuums zwischen dem inneren und äußeren Rohr umfasst.

14. Verfahren nach einem der Ansprüche 1 bis 12, **dadurch gekennzeichnet, dass** es während der ersten mechanischen Expansion das Anwenden eines Flusses eines Trägheitsgases zwischen dem inneren und dem äußeren Rohr umfasst.

15. Verfahren nach einem der Ansprüche 1 bis 14, **dadurch gekennzeichnet, dass** der Dorn während der ersten mechanischen Expansion längs und innerhalb des inneren Rohres bewegt wird, während das äußere Rohr und das innnere Rohr in einer fixierten Position gehalten werden.

16. Verfahren nach einem der Ansprüche 1 bis 14, **dadurch gekennzeichnet, dass** der Dorn während der ersten mechanischen Expansion in einer fixierten Position gehalten wird, während das äußere Rohr und das innere Rohr längs in Bezug auf den Dorn bewegt werden.

17. Verfahren nach Anspruch 2, weiter vor dem Montieren der Rohre eine chemische Vorbereitung umfassend, die Folgendes umfasst:
Säurebeizen mindestens einer Außenfläche des inneren Rohres und einer Innenfläche des äußeren Rohres;
Neutralisieren und Waschen der Außenfläche des inneren Rohres und der Innenfläche des äußeren Rohres.

## Revendications

1. Procédé pour produire un tube multicouche par expansion, dans lequel le tube multicouche comprend au moins une couche externe fabriquée à partir d'un tube extérieur en matériau métallique et d'une couche interne fabriquée à partir d'un tube intérieur en matériau métallique, le tube intérieur ayant un retour élastique inférieur au retour élastique du tube extérieur lorsque tous deux sont déformés et ayant un diamètre externe inférieur au diamètre interne du tube extérieur ;
ledit procédé comprenant les étapes de :
monter les tubes, le tube intérieur étant inséré à l'intérieur du tube extérieur ;
assembler le tube intérieur et le tube extérieur ensemble pendant une première expansion mécanique, qui comprend d'assurer un mouvement relatif entre un mandrin et les tubes montés dans une direction longitudinale, avec le mandrin étant situé intérieurement dans le tube intérieur, dans lequel au moins une partie du mandrin a un diamètre externe supérieur à un diamètre interne du tube intérieur, dans lequel pendant la première expansion mécanique, le mandrin entraîne une déformation plastique d'une épaisseur de paroi du tube intérieur,
ledit procédé étant **caractérisé en ce que** :
le tube extérieur en matériau métallique est constitué d'un alliage d'acier au carbone-manganèse et le tube intérieur en matériau métallique est constitué d'un alliage résistant à la corrosion ;
pendant la première expansion mécanique, l'expansion du tube intérieur entraîne uniquement une déformation élastique d'une épaisseur de paroi du tube extérieur, dans lequel une déformation de diamètre externe de 0,1 à 20 % et une déformation d'épaisseur de paroi de 0,1 à 40 % sont permises pour les tubes montés ensemble en comparant les valeurs de déformation totale du tube final aux tubes initialement assemblés avant le procédé de production.

2. Procédé selon la revendication 1, **caractérisé par**, avant le montage des tubes, une préparation chimique, comprenant :
décaper à l'acide au moins une surface intérieure du tube intérieur ;
neutraliser et laver au moins la surface intérieure du tube intérieur et appliquer un lubrifiant sur la surface intérieure du tube intérieur.

3. Procédé selon la revendication 2, **caractérisé en ce qu'**appliquer un lubrifiant comprend d'appliquer une couche d'oxalate et un savon réactif, ou appliquer une huile réactive.

4. Procédé selon l'une des revendications 1 à 3, **caractérisé en ce qu'**il comprend, avant le montage des tubes, de décaper à la grenaille une surface intérieure du tube extérieur et une surface extérieure du tube intérieur.

5. Procédé selon l'une des revendications 1 à 4, **caractérisé en ce qu'**il comprend, après le montage des tubes, un positionnement, dans lequel le tube extérieur et le tube intérieur montés ensemble sont disposés avec une extrémité des tubes montés supportée sur une matrice d'expansion et sont fixes par rapport à un banc d'expansion.

6. Procédé selon l'une des revendications 1, 4 ou 5, **caractérisé en ce qu'**il comprend, après le montage entre tubes, un chauffage par induction du tube extérieur et du tube intérieur, de manière synchronisée avec la première expansion mécanique.

7. Procédé selon la revendication 6, **caractérisé en ce qu'**il comprend de lubrifier au moins une surface intérieure du tube intérieur avec un lubrifiant basé sur un mélange d'eau et de graphite.

8. Procédé selon l'une des revendications 1 à 7, **caractérisé en ce qu'**il comprend, après la première expansion mécanique, un chauffage par induction du tube extérieur et du tube intérieur de manière synchronisée avec au moins une expansion mécanique à chaud supplémentaire.

9. Procédé selon une des revendications 6 à 8, **caractérisé en ce que** pendant le chauffage, une bobine d'induction électromagnétique est disposée extérieurement au tube extérieur et au tube intérieur et se déplace longitudinalement par rapport au tube extérieur et au tube intérieur de manière synchronisée avec le déplacement du mandrin.

10. Procédé selon une des revendications 6 à 8, **caractérisé en ce que** pendant le chauffage, un dispositif de chauffage est disposé intérieurement au tube extérieur et au tube intérieur et se déplace longitudinalement par rapport au tube extérieur et au tube intérieur en association avec la tige du mandrin.

11. Procédé selon une des revendications 6 à 10, **caractérisé en ce qu'**il comprend, après l'expansion mécanique, un cintrage du tube multicouche.

12. Procédé selon une des revendications 1 à 11, **caractérisé en ce que** le mandrin a la forme d'un cône tronqué, dont un diamètre maximal est plus grand qu'un diamètre interne du tube intérieur et un diamètre minimal est plus petit que le diamètre interne du tube intérieur.

13. Procédé selon une des revendications 1 à 12, **caractérisé en ce qu'**il comprend, après le montage des tubes, de souder des extrémités des deux tubes ensemble et de générer un vide entre les tubes intérieur et extérieur.

14. Procédé selon une des revendications 1 à 12, **caractérisé en ce qu'**il comprend, après la première expansion mécanique, d'appliquer d'un flux d'un gaz inerte entre les tubes intérieur et extérieur.

15. Procédé selon une des revendications 1 à 14, **caractérisé en ce que** pendant la première expansion mécanique, le mandrin est déplacé longitudinalement et intérieurement dans le tube intérieur alors que le tube extérieur et le tube intérieur sont maintenus à une position fixe.

16. Procédé selon une des revendications 1 à 14, **caractérisé en ce que** pendant la première expansion mécanique, le mandrin est maintenu à une position fixe alors que le tube extérieur et le tube intérieur sont déplacés longitudinalement par rapport au mandrin.

17. Procédé selon la revendication 2, comprenant en outre, avant le montage des tubes, une préparation chimique comprenant de :
décaper à l'acide une surface extérieure du tube intérieur et une surface intérieure du tube extérieur ;
neutraliser et laver la surface intérieure du tube intérieur et la surface intérieure du tube extérieur.
